# EUROPEAN PATENT SPECIFICATION

(11) **EP 3 211 889 B1**
(45) Date of publication and mention of the grant of the patent: **10.04.2019**
(21) Application number: 16397505.5
(22) Date of filing: 26.02.2016
(51) Int. Cl.: H04N 7/10, H04B 10/2575, H04H 20/10, H04H 20/78, H04L 12/28, H04N 7/22, H04N 21/222, H04N 21/2383, H04N 21/61, H04N 21/643

(54) **AN ARRANGEMENT FOR DISTRIBUTED CATV NETWORK**
ANORDNUNG FÜR VERTEILTES KABELFERNSEHNETZWERK
AGENCEMENT DE RÉSEAU CATV RÉPARTI

(43) Date of publication of application: 30.08.2017
(73) Proprietor: Teleste Oyj, 20660 Littoinen (FI)
(72) Inventor: Mäki, Kari, 20320 Turku (FI); Leppänen, Olli, 36110 Ruutana (FI)
(74) Representative: Berggren Oy, Tampere

(56) References cited:
- US-A1- 2013 191 877
- US-A1- 2014 101 711
- US-A1- 2014 199 077
- US-A1- 2015 092 531
- US-A1- 2015 295 669
- US-B1- 8 935 739
- DVB ORGANIZATION: "CM-SP-R-PHY-I02-1510011.pdf", DVB, DIGITAL VIDEO BROADCASTING, C/O EBU - 17A ANCIENNE ROUTE - CH-1218 GRAND SACONNEX, GENEVA - SWITZERLAND, 1 October 2015 (2015-10-01), XP017847452,
- DVB ORGANIZATION: "CM-SP-R-DEPI-I02-151001.pdf", DVB, DIGITAL VIDEO BROADCASTING, C/O EBU - 17A ANCIENNE ROUTE - CH-1218 GRAND SACONNEX, GENEVA - SWITZERLAND, 5 October 2015 (2015-10-05), XP017847413,
- DVB ORGANIZATION: "CM-TR-DCA-V01-150908.pdf", DVB, DIGITAL VIDEO BROADCASTING, C/O EBU - 17A ANCIENNE ROUTE - CH-1218 GRAND SACONNEX, GENEVA - SWITZERLAND, 9 September 2015 (2015-09-09), XP017847488,
- HESHAM ELBAKOURY (HUAWEI): "Distributed CCAP Architectures ; omniran-15-0057-01-00TG-distributed-ccap-a rchitectures", IEEE DRAFT; OMNIRAN-15-0057-01-00TG-DISTRIBUTED-CCAP-A RCHITECTURES, IEEE-SA MENTOR, PISCATAWAY, NJ USA, vol. 802.1 OMNIRAN, no. 1, 20 January 2016 (2016-01-20), pages 1-8, XP068106114, [retrieved on 2016-01-20]
- HESHAM ELBAKOURY VERSION: 1 0: "IEEE 1904.2 Activation Proposal ; anwg_1512_elbakoury_resume_umt_2", IEEE DRAFT; ANWG_1512_ELBAKOURY_RESUME_UMT_2, IEEE-SA, PISCATAWAY, NJ USA, vol. 1904, 12 December 2015 (2015-12-12), pages 1-19, XP068102466, [retrieved on 2015-12-12]
- DVB ORGANIZATION: "CM-SP-R-OOB-I02-160121.pdf", DVB, DIGITAL VIDEO BROADCASTING, C/O EBU - 17A ANCIENNE ROUTE - CH-1218 GRAND SACONNEX, GENEVA - SWITZERLAND, 21 January 2016 (2016-01-21), XP017849158,

## Description

### Field of the invention

The invention relates to cable television (CATV) networks, and especially to an arrangement for a distributed cable television network.

### Background of the invention

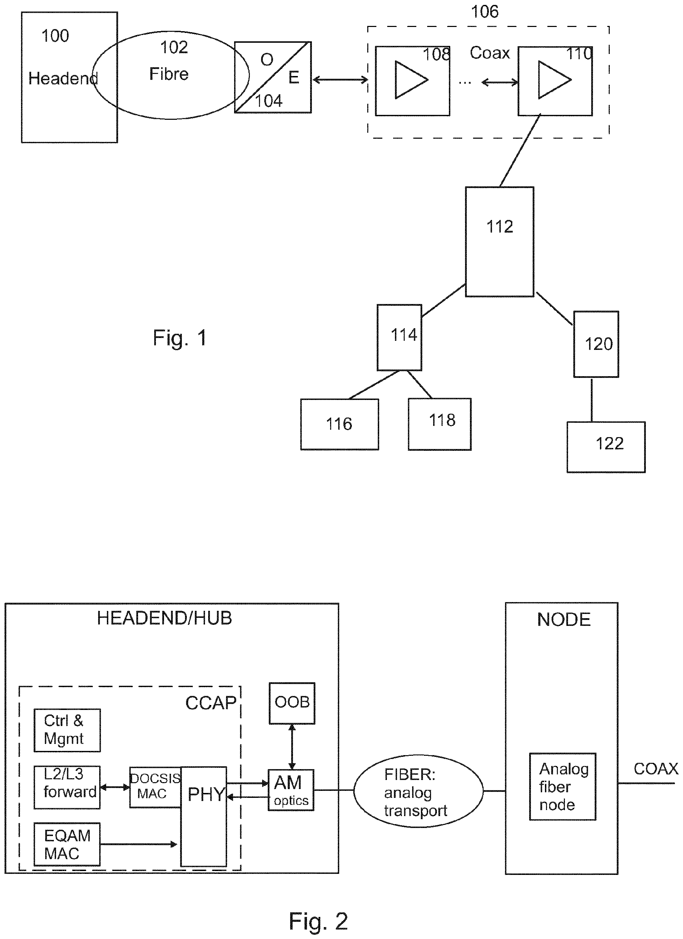

CATV networks may be implemented with various techniques and network topologies, but currently most cable television networks are implemented as so-called HFC networks (Hybrid Fiber Coax), i.e. as combinations of a fibre network and a coaxial cable network. Figure 1 shows the general structure of a typical HFC network. Program services are introduced from the main amplifier 100 (a so-called headend) of the network via an optical fibre network 102 to a fibre node 104, which converts the optical signal to an electric signal to be relayed further in a coaxial cable network 106. Depending on the length, branching, topology, etc. of the coaxial cable network, this coaxial cable segment typically comprises one or more broadband amplifiers 108, 110 for amplifying program service signals in a heavily attenuating coaxial media. From the amplifier the program service signals are introduced to a cable network 112 of a smaller area, such as a master antenna network of an apartment building, which are typically implemented as coaxial tree or star networks comprising signal splitters for distributing the program service signals to each customer. From the signal splitters the signal is further relayed either via a cable modem 114 to a television receiver 116 or a computer 118, or via a so-called set-top box 120 to a television receiver 122.

Lately, some evolvement concepts have been introduced to the general structure of the CATV network through various distributed headend architectures. Therein, some of the functionalities of the headend are distributed to a remote node closer to the customers, such as to the fiber node 104. Moreover, instead of using RF-based optical transmission between the core headend and the remote node, IP-based data transmission, such as Ethernet data, is used. Thus, significant advantages may be achieved through better scalability and channel capacity usage of the CATV network.

However, there are a large number of amplifiers and other network elements that controlled and managed by the headend using different kinds of analog RF signaling. The introduction of the IP-based data transmission between the core headend and the remote node in the distributed architectures may endanger the control of these network elements, or even make it impossible, for the headend.

### Brief summary of the invention

Now, an improved arrangement has been developed to reduce the above-mentioned problems. As aspects of the invention, we present a method and a network element of a cable television network, which are characterized in what will be presented in the independent claims.

The dependent claims disclose advantageous embodiments of the invention.

According to an aspect of the invention, there is provided a method for providing control signals to a network element of a cable television (CATV) network, wherein functionalities of a headend of the CATV network are distributed between a core headend and one or more remote nodes (RPD; RMD), wherein data transfer between the core headend and the one or more remote nodes is carried out as IP data, the method comprising: receiving, in one of said remote nodes, an IP capsulated control signal from the core headend for controlling operation of a CATV network element; decapsulating the control signal; carrying out a digital-to-analog conversion for the control signal; and transmitting the analog RF control signal to the CATV network element.

The digital-to-analog conversion includes modulating the control signal into a frequency shift key (FSK) modulated signal.

The remote node comprises processing means for analyzing the decapsulated control signal, the method further comprising identifying the vendor of the network element from the decapsulated control signal; and determining vendor-specific frequencies to be used for FSK modulated signal.

According to an embodiment, the method further comprises transmitting the analog RF control signal to the CATV network element as in-band signalling.

According to an embodiment, the method further comprises transmitting the analog RF control signal to the particular CATV network element as unicast transmission.

According to an embodiment, the method further comprises transmitting the analog RF control signal to all CATV network element connected to the remote node as broadcast transmission.

According to an embodiment, the method further comprises receiving, in said remote node, an analog RF response signal from the CATV network element; carrying out an analog-to-digital conversion for the response signal; encapsulating the response signal as an IP capsulated response signal; and transmitting the IP capsulated response signal to the core headend.

A second aspect relates to a network element of a cable television (CATV) network, said network element comprising a subset of functionalities of a headend of the CATV network and wherein data transfer between a core headend and the network element is carried out as IP data, the network element being configured to: receive an IP capsulated control signal from the core headend for controlling operation of a second CATV network element; decapsulate the control signal; carry out a digital-to-analog conversion for the control signal; and transmit the analog RF control signal to the second CATV network element.

These and other aspects, embodiments and advantages will be presented later in the detailed description of the invention.

### Brief description of the drawings

The invention will now be described in more detail in connection with preferred embodiments with reference to the appended drawings, in which:
- Fig. 1: shows the general structure of a typical HFC network;
- Fig. 2: shows an exemplified block chart of a conventional integrated CCAP implementation;
- Fig. 3: shows an exemplified block chart of a distributed CCAP implementation with a Remote PHY Device (RPD);
- Fig. 4: shows an exemplified block chart of a distributed CCAP implementation with a Remote MAC-PHY Device (RMD);
- Fig. 5: shows a flow chart according to an embodiment of the invention; and
- Fig. 6: shows a signaling chart according to various embodiments of the invention.

### Detailed description of the embodiments

Data Over Cable Service Interface Specification (DOCSIS) is a CATV standard providing specifications for high-bandwidth data transfer in an existing CATV system. DOCSIS may be employed to provide Internet access over existing hybrid fiber-coaxial (HFC) infrastructure of cable television operators. DOCSIS has been evolved through versions 1.0, 1.1, 2.0 and 3.0 to the latest version of 3.1. DOCSIS provides a lucrative option for cable network providers to maximize both the downstream and upstream data throughput using the existing cable TV network, but without making expensive changes to the HFC network infrastructure.

When implementing the HFC network of Figure 1 according to DOCSIS, the headend 100 of the CATV network comprises inputs for signals, such as TV signals and IP signals, a television signal modulator and a cable modem termination system (CMTS). The CMTS provides high-speed data services to customers thorough cable modems (CM; 114) locating in homes. The CMTS forms the interface to the IP-based network over the Internet. It modulates the data from the Internet for downstream transmission to homes and receives the upstream data from homes. The CMTS additionally manages the load balancing, error correction parameters and the class of service (CoS).

Signals from the headend 100 are distributed optically (fiber network 102) to within the vicinity of individual homes, where the optical signals are converted to electrical signals at the terminating points 104. The electrical signals are then distributed to the various homes via the existing 75 ohm coaxial cables 106. The maximum data transfer of the coaxial cables is limited due to strong frequency-based attenuation. Therefore, the electrical signals transmitted over coaxial cables must be amplified. The amplifiers 108, 110 used for this purpose are suited to a specific frequency range. In addition, the upstream and downstream must occur over the same physical connection. The last part 112 of the coaxial connection between the CMTS and the CMs branches off in a tree structure. A CMTS transmits the same data to all CMs located along the same section of cable (one-to-many communications). A request/grant mechanism exists between the CMTS and the CMs, meaning that a CM needing to transmit data must first send a request to the CMTS, after which it can transmit at the time assigned to it.

In the following, some lately introduced features of DOCSIS are explained for understanding the background of the embodiments. For further details, a reference is made to the following documents: Data-Over-Cable Service Interface Specifications, DCA-MHAv2, Remote PHY Specification, CM-SP-R-PHY-101-150615, by Cable Labs 2014-15, and Data-Over-Cable Service Interface Specifications, DCA-Remote MACPHY, Remote MAC-PHY Technical Report, CM-TR-R-MACPHY-V01-150730, by Cable Labs 2015.

Converged Cable Access Platform (CCAP) may be defined as an access-side networking element or set of elements that combines the functionality of a CMTS with that of an Edge QAM (i.e. the modulation), providing high-density services to cable subscribers. DOCSIS MAC and PHY provide the data functionality and EQAM provides the video functionality of the CCAP. Conventionally, the CCAP functionalities have been implemented in the headend/hub. Figure 2 illustrates the functionalities that typically reside in the cable headend/hub with a conventional CCAP implementation.

DOCSIS 3.1 specification introduces some options for employing a Distributed CCAP Architecture (DCA). In a DCA, some features of the CCAP are distributed from headend/hub to the network elements closer to the customers. The data transmission between the distributed parts of the CCAP is typically carried out through a fiber connection. This may provide both scale advantages and flexible deployment options by maximizing the channel capacity and simplifying many operations via the usage of digital fiber and Ethernet transport.

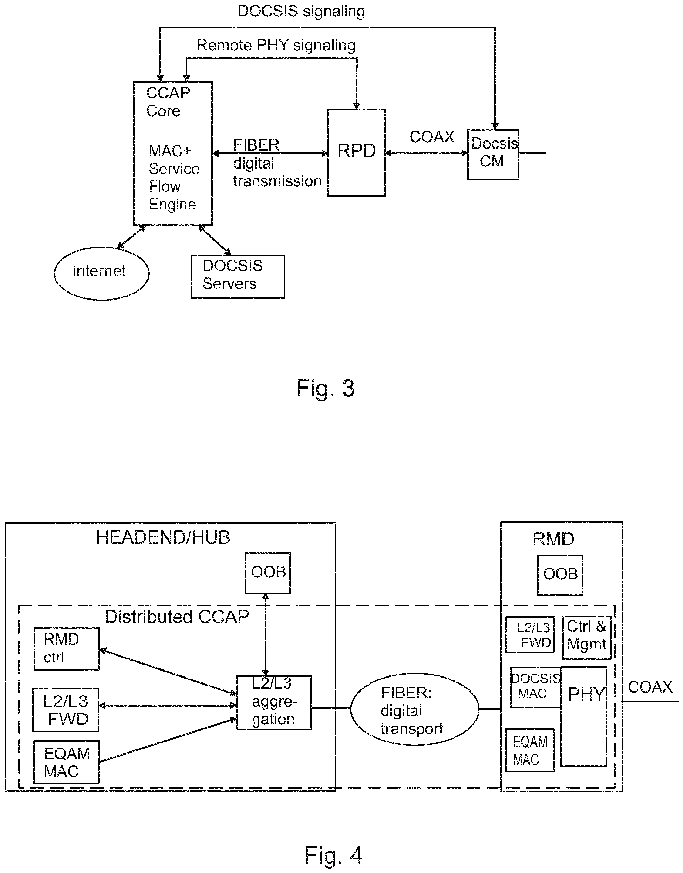

One option for employing a DCA, which is shown in Figure 3, is called a Remote PHY Architecture, where an integrated CCAP is separated into the CCAP-Core and the Remote PHY Device (RPD). The CCAP-Core contains both a CMTS Core for DOCSIS and an EQAM Core for video. The CMTS Core contains the DOCSIS MAC and the upper layer DOCSIS protocols. This includes all signaling functions, downstream and upstream bandwidth scheduling, and DOCSIS framing. The EQAM Core contains all the video processing functions that an EQAM provides conventionally.

The Remote PHY Device (RPD) is a physical layer converter for converting downstream DOCSIS, MPEG video and OOB signals received from a CCAP-Core over a digital medium such as Ethernet or PON to analog for transmission over RF or linear optics. The RPD also converts upstream DOCSIS, and OOB (Out-of-Band) signals received from an analog medium such as RF or linear optics to digital for transmission over Ethernet or PON to a CCAP-Core. The RPD platform contains mainly PHY related circuitry, such as downstream QAM modulators, upstream QAM demodulators, together with pseudowire logic to connect to the CCAP-Core. In other words, the data transmission between the RPD and the core headend (i.e. the CCAP-Core) takes place as IP data over Ethernet or PON.

DOCSIS 3.1 specification also introduces a Distributed CCAP Architecture (DCA) called Remote MAC-PHY (R-MACPHY), which is shown in Figure 4. In this architecture, the R-MACPHY Device (RMD) replaces the traditional analog fiber node in the HFC network. There are various options how to implement Remote MAC-PHY architecture, thereby affecting the functions implemented in the RMD. The DOCSIS MAC and PHY layer functionality is always together and located within the RMD. The other functions that are candidates to be included in the RMD, or which may be located in the headend/hub, are shown in dashed boxes in Figure 4.

From a downstream perspective, an RMD accepts data from a hub-located L2 aggregation device. This includes data, video and also digitized signal sequence from an external OOB converter. From the upstream perspective, RMD collects data from the associated cable modems (CM) and STBs, and forwards it to the hub aggregation device and STB control system via the OOB channel. Regardless of the selected implementation, the data transmission between the RMD and the headend/hub takes place as IP data over Ethernet or PON.

While the DCA options of DOCSIS 3.1 may provide many advantages in improving the channel capacity and the efficiency of the CATV networks, the fact is that the existing HFC network structures of the cable operators will be updated slowly and a great deal of the existing network elements will remain in use for a long time.

For example, there is a need to control ingress switches situated in amplifiers by using one-way communication from the headend or manage the amplifier by using two-way communication from/to the headend. Typically, the control signaling is carried out by using modems in accordance with DOCSIS or HMS (Hybrid Management Sublayer) standard or proprietary modems. According to the invention, proprietary FSK (Frequency Shift Keying) signaling solution is used.

When the various DCA options including Remote PHY (RPD) or Remote MAC-PHY (RMD) nodes are eventually introduced to the CATV networks, the RPD or the RMD will terminate the RF upstream and downstream, since the link from the RPD/RMD node to the headend will be IP data over p2p Ethernet or PON (EPON, GPON). Thus, the RPD or the RMD will also terminate the communication channels for the ingress switches/management access of the amplifiers. As a result, none of these HMS or proprietary RF signal based solutions are usable any more from the headend; only the DOCSIS 2-way communication system is available for providing control signals through RPDs or RMDs, as shown in Figure 3. However, there are a large number of amplifiers and other network elements on the field that have another system than DOCSIS for controlling ingress switches or managing the network elements.

Therefore, an improved procedure is needed in order to enable the control of network elements not supporting DOCSIS.

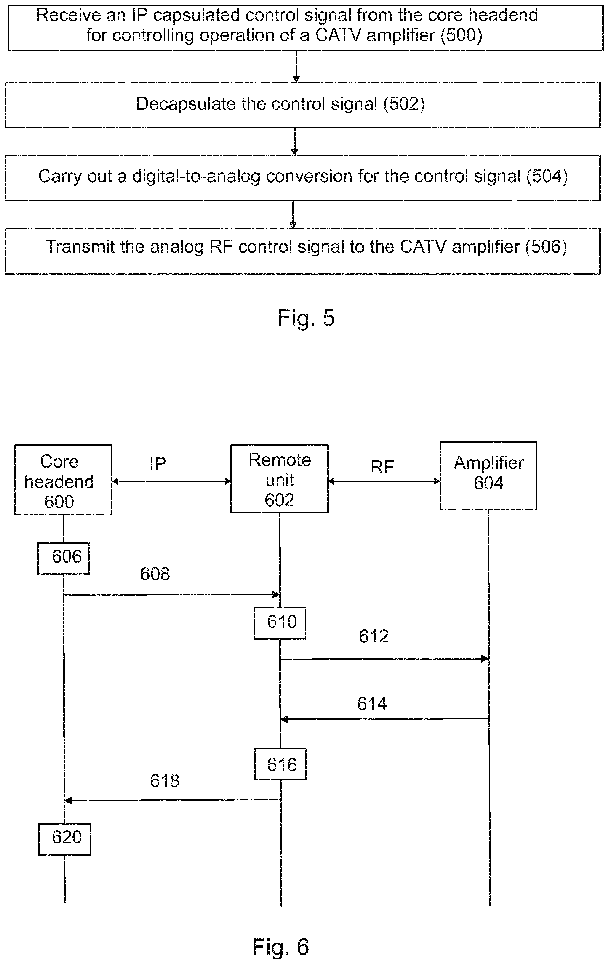

A method according to an aspect, which is illustrated in a flow chart of Figure 5, may be implemented in a cable television (CATV) network, wherein functionalities of a headend of the CATV network are distributed between a core headend and one or more remote nodes (RPD; RMD), and wherein data transfer between the core headend and the one or more remote nodes is carried out as IP data. In the method, one of said remote nodes receives (500) an IP capsulated control signal from the core headend for controlling operation of a CATV network element. The control signal is decapsulated (502) and a digital-to-analog conversion is carried out (504) for the control signal. The analog RF control signal is transmitted (506) to the CATV network element.

Hereinafter, the term "remote node" refers to the features of the CCAP that are distributed from the conventional integrated headend/hub to a remote unit, such as the RPD or the RMD. The term "core headend" refers to the features of the CCAP remaining in the headend/hub. It is also possible that all CCAP functionalities are distributed to the remote node. It is noted that a CATV network may comprise several headends. There may be a central headend and one or more regional or sub-headends. In such case, the term "core headend" may also refer to the features of the CCAP remaining in the regional or sub-headend. As becomes evident from the above, the division of the functions between the remote node and the core headend is not fixed, but it may vary depending of the network configuration selected by the operator. Since the control signaling in question is non-DOCSIS dependent, the "core headend" may also refer to a functionality responsible for relaying the signaling to an appropriate entity.

In the following, the embodiments are described by using an amplifier of a CATV network as example of network element to be controlled. However, the embodiments are not limited to amplifiers only, but they can be applied to any corresponding network element not supporting DOCSIS. For example, in the existing HFC networks there are standalone ingress switches and Ethernet multitaps, which can be controlled in a similar manner.

Consequently, when controlling the operation of an amplifier, the core headend encapsulates the control signal into IP data frames, such as Ethernet frames, so as to enable the transmission within the DCA where the data transmission takes place as IP data over Ethernet or PON. It is also possible that the core headend receives the control signal as encapsulated from an outside server, and the core headend just relays the encapsulated control signal to the remote node. The remote node, such as the RPD or the RMD, then decapsulates the control signal from the IP frames and converts the digital control signal into an analog RF signal, which can be interpreted by the amplifier. Thus, even the amplifiers not supporting DOCSIS control protocol can be controlled in a DCA implementation.

According to the invention the digital-to-analog conversion includes modulating the control signal into a frequency shift key (FSK) modulated signal. The various proprietary control signaling used in current amplifiers is typically FSK modulated signals. Thus, depending on the type of amplifiers in use, the control signals can be FSK modulated appropriately.

Even though the amplifiers may be configured to receive and interpret FSK modulated signaling, it is possible that the amplifier may be capable of interpreting signals modulated by some other type of modulation. Thus, the remote node may modulate the control signals, for example, using QPSK (Quadrature Phase Shift Keying) modulation.

According to the invention, the remote node comprises processing means for analyzing the decapsulated control signal, the method further comprises identifying the vendor of the amplifier from the decapsulated control signal, and determining vendor-specific frequencies to be used for FSK modulated signal. A CATV operator network may comprise amplifiers from several vendors. In such case, the core network may include an identifier into the control signal or its header, on the basis of which the vendor of the amplifier can be determined. For example, the MAC header may comprise a field identifying the vendor. The FSK signaling of different vendors may differ from each other, and therefore the remote node may advantageously determine vendor-specific frequencies to be used for FSK modulated signal.

According to an embodiment, the analog RF control signals, preferably but not limiting to FSK modulated signals, are transmitted to the CATV amplifier as inband signaling. The in-band frequency range used in downstream signal transmission is 54 - 1794 MHz. Depending on the used FSK modulation frequency, corresponding frequency gaps are preferably arranged in the payload data for allowing the signaling to be carried out as in-band.

According to an embodiment, the method further comprises transmitting the analog RF control signal to the particular CATV amplifier as unicast transmission. In most cases, the network address of the amplifier to be controlled is known by the core headend and/or the remote node. Thus, in addition to an amplifier identification, the network address of the amplifier may be included in the IP capsulated control signal sent by the core headend, or it may be known or determined by the remote node. Thus, the remote node is capable of transmitting the analog RF control signal only to the CATV amplifier in question as unicast transmission

According to an embodiment, the method further comprises transmitting the analog RF control signal to all CATV amplifiers connected to the remote node as broadcast transmission. Herein, for some reason, the remote node does not know or cannot determine the network address of the amplifier to be controlled. In such case, the remote node may transmit the analog RF control signal to all CATV amplifiers connected to the remote node as broadcast transmission, whereby only the CATV amplifier in question may detect, on the basis of the amplifier identification, that the control signal is meant for it, while the other amplifiers simply ignore the control signal. On the other hand, broadcast transmission may be used to control all amplifiers connected to the remote node. For example, all amplifiers may be controlled to switch their attenuation off using one broadcast transmitted control signal.

Depending on the processing required to be carried out in the remote node, the remote node may comprise various types of processing means. The remote node may comprise one or more processors, a memory, and computer program code stored in the memory, whereby the computer program code, when executed in at least one processor, causes the remote node to carry out the processing according to the above embodiments. The computer program code may be configured to, for example, identify the vendor of the amplifier from the decapsulated control signal, take into account the vendor-specific frequencies to be used for FSK modulated signal, determine the amplifier identification, etc.

The remote node may also comprise a FPGA (Field-Programmable Gate Array) circuit, whose programmable logic blocks are configured to carry out the required processing.

For carrying out the digital-to-analog and possible analog-to-digital conversions, the remote node may comprise specific D/A and A/D converters.

Figure 6 shows a signaling chart illustrating various embodiments described above more in detail. Figure 6 shows a simplified DCA comprising a core headend (600), a remote node (602; RPD; RMD) and an amplifier (604). The data transfer between the core headend and the remote node is carried out as IP data, whereas the data transfer between the remote node and the amplifier is carried out as analog RF signals.

When controlling the operation of an amplifier, the core headend may encapsulate (606) the control signal into IP data frames, such as Ethernet frames. As mentioned above, the core headend may also receive the control signal as readily IP encapsulated. The IP encapsulated control signal is sent (608) to the remote node as IP data over Ethernet or PON. The remote node decapsulates the control signal from the IP frames and converts (610) the digital control signal into an analog RF signal. The analog RF signal, FSK modulated signal, is transmitted (612) to the amplifier.

Figure 6 also shows the two-way control signaling according to an embodiment. As mentioned above, amplifiers need to be managed and monitors by using two-way communication from/to the headend. The amplifiers may comprise a transponder, which may communicate with headend, for example, using HMS or proprietary modems.

In such a situation, the control signal (608, 612) sent from the headend may require a response from the amplifier. The response may be, for example, an acknowledgement, a status data of a parameter value, a report, etc. Thus, the amplifier sends (614) a response signal as an analog RF signal, FSK modulated signal, to the remote node. The remote node carries out an analog-to-digital conversion (616) and encapsulates the acknowledgement signal into IP data frames, such as Ethernet frames. The IP encapsulated response signal is sent (618) to the core headend as IP data over Ethernet or PON. The core headend decapsulates (620) the response signal from the IP frames and interprets its content. Alternatively, the core headend may relay the response signal to a further entity for decapsulation.

In general, the various embodiments may be implemented in hardware or special purpose circuits or any combination thereof. While various embodiments may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

A skilled person appreciates that any of the embodiments described above may be implemented as a combination with one or more of the other embodiments, unless there is explicitly or implicitly stated that certain embodiments are only alternatives to each other.

The various embodiments can be implemented with the help of computer program code that resides in a memory and causes the relevant apparatuses to carry out the invention. Thus, the implementation may include a computer readable storage medium stored with code thereon for use by an apparatus, such as the remote node, which when executed by a processor, causes the apparatus to perform the various embodiments or a subset of them. Additionally or alternatively, the implementation may include a computer program embodied on a non-transitory computer readable medium, the computer program comprising instructions causing, when executed on at least one processor, at least one apparatus to apparatus to perform the various embodiments or a subset of them. For example, an apparatus may comprise circuitry and electronics for handling, receiving and transmitting data, computer program code in a memory, and a processor that, when running the computer program code, causes the apparatus to carry out the features of an embodiment.

It will be obvious for a person skilled in the art that with technological developments, the basic idea of the invention can be implemented in a variety of ways. Thus, the invention and its embodiments are not limited to the above-described examples but they may vary within the scope of the claims.

## Claims

1. A method for providing control signals to a network element of a cable television (CATV) network, wherein functionalities of a headend of the CATV network are distributed between a core headend and one or more remote nodes (RPD; RMD), wherein data transfer between the core headend and the one or more remote nodes is carried out as IP data, the method comprising:
receiving, in one of said remote nodes, an IP capsulated control signal from the core headend for controlling a CATV network element;
decapsulating the control signal;
identifying, by processing means of the remote node, the vendor of the network element from the decapsulated control signal;
determining vendor-specific frequency shift key (FSK) frequencies on the basis of the identified vendor, said frequencies to be used for FSK modulated signal;
modulating the control signal into an FSK modulated signal; and
transmitting the FSK modulated control signal to the CATV network element.

2. The method according to claim 1, further comprising
transmitting the FSK modulated control signal to the CATV network element as in-band signalling.

3. The method according to claim 1 or 2, further comprising
transmitting the FSK modulated control signal to the particular CATV network element as unicast transmission.

4. The method according to claim 1 or 2, further comprising
transmitting the FSK modulated control signal to all CATV network element connected to the remote node as broadcast transmission.

5. A network element of a cable television (CATV) network, said network element comprising a subset of functionalities of a headend of the CATV network and wherein data transfer between a core headend and the network element is carried out as IP data, the network element being configured to:
receive an IP capsulated control signal from the core headend for controlling a second CATV network element;
decapsulate the control signal;
identify, by processing means of the network element, the vendor of the second network element from the decapsulated control signal;
determine vendor-specific frequency shift key (FSK) frequencies on the basis of the identified vendor, said frequencies to be used for FSK modulated signal;
modulating the control signal into an FSK modulated signal; and
transmit the FSK modulated control signal to the second CATV network element.

6. The network element according to claim 5, the network element being configured to
transmit the FSK modulated control signal to the second CATV network element as in-band signalling.

7. The network element according to any of claims 5 or 6, the network element being configured to
transmit the FSK modulated control signal to the second CATV network element as unicast transmission.

8. The network element according to any of claims 5 or 6, the network element being configured to
transmit the FSK modulated control signal to all second CATV network element connected to the network element as broadcast transmission.

9. The network element according to any of claims 5 - 8, wherein the network element is a remote node (RPD; RMD) of a distributed CCAP architecture (DCA) according to DOCSIS standard.

## Patentansprüche

1. Ein Verfahren zum Bereitstellen von Steuersignalen an ein Netzwerkelement eines Kabelfernseh-(CATV)-Netzwerks, wobei die Funktionalitäten einer Kopfstelle des CATV-Netzwerks zwischen einer Kernkopfstelle und einem oder mehreren entfernten Knoten (RPD; RMD) verteilt werden, wobei die Datenübertragung zwischen der Kernkopfstelle und dem einen oder mehreren entfernten Knoten als IP-Daten ausgeführt wird, wobei das Verfahren Folgendes umfasst:
Empfangen, in einem der entfernten Knoten, eines IP-verkapselten Steuersignals aus der Kernkopfstelle zum Steuern eines CATV-Netzwerkelements;
Entkapseln des Steuersignals;
Identifizieren, mittels Verarbeitungsmitteln des entfernten Knotens, des Händlers des Netzwerkelements aus dem entkapselten Steuersignal;
Bestimmen der händlerspezifischen Frequenzumtastungs-(FSK)-Frequenzen auf der Grundlage des identifizierten Händlers, wobei die Frequenzen für ein FSK-moduliertes Signal verwendet werden;
Modulieren des Steuersignals in ein FSK-moduliertes Signal; und
Übertragen des FSK-modulierten Steuersignals an das CATV-Netzwerkelement.

2. Verfahren gemäß Anspruch 1, ferner umfassend
die Übertragung des FSK-modulierten Steuersignals an das CATV-Netzwerkelement als Inband-Signalisierung.

3. Verfahren gemäß Anspruch 1 oder 2, ferner umfassend
die Übertragung des FSK-modulierten Steuersignals an das spezielle CATV-Netzwerkelement als Unicast-Übertragung.

4. Verfahren gemäß Anspruch 1 oder 2, ferner umfassend
die Übertragung des FSK-modulierten Steuersignals an alle mit dem entfernten Knoten verbundenen CATV-Netzwerkelemente als Rundfunkübertragung.

5. Ein Netzwerkelement eines Kabelfernseh-(CATV)-Netzwerks, wobei das Netzwerkelement eine Untermenge an Funktionalitäten einer Kopfstelle des CATV-Netzwerks umfasst und wobei die Datenübertragung zwischen einer Kernkopfstelle und dem Netzwerkelement als IP-Daten ausgeführt wird, wobei das Netzwerkelement zu Folgendem konfiguriert ist:
Empfangen eines IP-verkapselten Steuersignals aus der Kernkopfstelle zum Steuern eines zweiten CATV-Netzwerkelements;
Entkapseln des Steuersignals;
Identifizieren, mittels Verarbeitungsmitteln des Netzwerkelements, des Händlers des zweiten Netzwerkelements aus dem entkapselten Steuersignal;
Bestimmen der händlerspezifischen Frequenzumtastungs-(FSK)-Frequenzen auf der Grundlage des identifizierten Händlers, wobei die Frequenzen für ein FSK-moduliertes Signal verwendet werden;
Modulieren des Steuersignals in ein FSK-moduliertes Signal; und
Übertragen des FSK-modulierten Steuersignals an das zweite CATV-Netzwerkelement.

6. Netzwerkelement gemäß Anspruch 5, wobei das Netzwerkelement zu Folgendem konfiguriert ist:
Übertragen des FSK-modulierten Steuersignals an das zweite CATV-Netzwerkelements als Inband-Signalisierung.

7. Netzwerkelement gemäß einem der Ansprüche 5 oder 6, wobei das Netzwerkelement zu Folgendem konfiguriert ist:
Übertragen des FSK-modulierten Steuersignals an das zweite CATV-Netzwerkelements als Unicast-Übertragung.

8. Netzwerkelement gemäß einem der Ansprüche 5 oder 6, wobei das Netzwerkelement zu Folgendem konfiguriert ist:
Übertragen des FSK-modulierten Steuersignals an alle mit dem Netzwerkelement verbundenen zweiten CATV-Netzwerkelemente als Rundfunkübertragung.

9. Netzwerkelement gemäß einem der Ansprüche 5 bis 8, wobei das Netzwerkelement ein entfernter Knoten (RPD; RMD) einer verteilten CCAP-Architektur (DCA) gemäß DOCSIS Standard ist.

## Revendications

1. Procédé pour fournir des signaux de commande à un élément de réseau d'un réseau de télévision par câble (CATV), dans lequel des fonctionnalités d'une tête de réseau du réseau CATV sont réparties entre une tête de réseau principale et un ou plusieurs noeud(s) à distance (RPD ; RMD), dans lequel un transfert de données entre la tête de réseau principale et les un ou plusieurs noeuds à distance est mis en oeuvre en tant que données IP, le procédé comprenant :
la réception, au niveau de l'un desdits noeuds à distance, d'un signal de commande IP encapsulé en provenance de la tête de réseau principale pour commander un élément de réseau CATV ;
la désencapsulation du signal de commande ;
l'identification, par un moyen de traitement du noeud à distance, du vendeur de l'élément de réseau à partir du signal de commande désencapsulé ;
la détermination de fréquences à décalage de fréquence (FSK) spécifiques au vendeur sur la base du vendeur identifié, lesdites fréquences étant destinées à être utilisées pour un signal modulé FSK ;
la modulation du signal de commande selon un signal modulé FSK ; et
l'émission du signal de commande modulé FSK sur l'élément de réseau CATV.

2. Procédé selon la revendication 1, comprenant en outre :
l'émission du signal de commande modulé FSK sur l'élément de réseau CATV en tant que signalisation intrabande.

3. Procédé selon la revendication 1 ou 2, comprenant en outre :
l'émission du signal de commande modulé FSK sur l'élément de réseau CATV particulier en tant qu'émission par unidiffusion.

4. Procédé selon la revendication 1 ou 2, comprenant en outre :
l'émission du signal de commande modulé FSK sur tous les éléments de réseau CATV qui sont connectés au noeud à distance en tant qu'émission par diffusion générale.

5. Élément de réseau d'un réseau de télévision par câble (CATV), ledit élément de réseau comprenant un sous-jeu de fonctionnalités d'une tête de réseau du réseau CATV et dans lequel un transfert de données entre une tête de réseau principale et l'élément de réseau est mis en oeuvre en tant que données IP, l'élément de réseau étant configuré pour :
recevoir un signal de commande IP encapsulé en provenance de la tête de réseau principale pour commander un second élément de réseau CATV ;
désencapsuler le signal de commande ;
identifier, par un moyen de traitement de l'élément de réseau, le vendeur du second élément de réseau à partir du signal de commande désencapsulé ;
déterminer des fréquences à décalage de fréquence (FSK) spécifiques au vendeur sur la base du vendeur identifié, lesdites fréquences étant destinées à être utilisées pour un signal modulé FSK ;
moduler le signal de commande selon un signal modulé FSK ; et
émettre le signal de commande modulé FSK sur le second élément de réseau CATV.

6. Élément de réseau selon la revendication 5, l'élément de réseau étant configuré pour :
émettre le signal de commande modulé FSK sur le second élément de réseau CATV en tant que signalisation intrabande.

7. Élément de réseau selon l'une quelconque des revendications 5 ou 6, l'élément de réseau étant configuré pour :
émettre le signal de commande modulé FSK sur le second élément de réseau CATV en tant qu'émission par unidiffusion.

8. Élément de réseau selon l'une quelconque des revendications 5 ou 6, l'élément de réseau étant configuré pour :
émettre le signal de commande modulé FSK sur tous les seconds éléments de réseau CATV qui sont connectés à l'élément de réseau en tant qu'émission par diffusion générale.

9. Élément de réseau selon l'une quelconque des revendications 5 à 8, dans lequel l'élément de réseau est un noeud à distance (RPD ; RMD) d'une architecture CCAP répartie (DCA) conformément au standard DOCSIS.
